(19) Europäisches Patentamt
European Patent Office
Office européen des brevets

(11) EP 0 808 810 A1

(12) # DEMANDE DE BREVET EUROPEEN

(43) Date de publication:
**26.11.1997 Bulletin 1997/48**

(51) Int Cl.[6]: **C04B 33/04**, C04B 33/28, B01F 17/00, C04B 33/24

(21) Numéro de dépôt: **97401059.7**

(22) Date de dépôt: **13.05.1997**

(84) Etats contractants désignés:
**AT BE CH DE ES FR GB IT LI PT**

(30) Priorité: **13.05.1996 FR 9605914**

(71) Demandeur: **CFPI INDUSTRIES**
**92233 Gennevilliers (FR)**

(72) Inventeurs:
- **Schapira, Joseph**
**75015 Paris (FR)**
- **Gasse, Jean-Jacques**
**27600 Gaillon (FR)**
- **Cheminaud, Jean-Claude**
**95220 Herblay (FR)**
- **Hadzamann, Eric**
**60250 Mouy (FR)**

(74) Mandataire: **Koch, Gustave**
**Cabinet PLASSERAUD**
**84, rue d'Amsterdam**
**75440 Paris Cédex 09 (FR)**

(54) **Procédé de fabrication de produits en terre cuite et agent propre à améliorer les propriétés rhéologiques des argiles**

(57) Procédé de fabrication, à partir d'argiles, de produits en terre cuite, notamment de tuiles, de briques et d'accessoires de toiture et de cheminées, caractérisé par le fait que l'on fait comporter auxdites argiles constituant la matière première, une quantité efficace d'au moins un agent propre à améliorer leurs propriétés rhéologiques ou agent rhéologique, choisi dans le groupe comprenant les mono-, di- et trialcoylphosphates esters de formule (I)

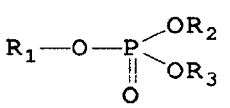

(I)

dans laquelle

- $R_1$ représente un radical alkyle, hydroxyalkyle, alcoxyalkyle, polyalcoxyalkyle, haloalkyle, cycloalkyle ou aminoalkyle comprenant de 1 à 40 atomes de carbone,
- $R_2$ et $R_3$, qui sont identiques ou différents l'un de l'autre, représentent un atome d'hydrogène ou un radical alkyle, hydroxyalkyle, alcoxyalkyle, polyalcoxyalkyle, haloalkyle, cycloalkyle ou aminoalkyle comprenant de 1 à 40 atomes de carbone,

ou certains dérivés de ces esters.

EP 0 808 810 A1

## Description

L'invention a pour objet un procédé de fabrication de produits en terre cuite; les produits en question comprennent les tuiles, les briques et les accessoires de toiture et de cheminées; ils comprennent également les matériels sanitaires tels que les lavabos et les éviers; la matière première est constituée dans les deux cas par des argiles, celles-ci étant sous forme atomisée lorsqu'il s'agit de fabriquer des matériels sanitaires.

Elle vise également, en tant que produit industriel nouveau, un agent propre à améliorer les propriétés rhéologiques desdites argiles.

Les industries céramistes de fabrication des produits en terre cuite que sont les tuiles, les briques et les accessoires de toiture et de cheminées, sont fortement consommatrices d'énergie. Le coût énergétique dû au séchage des pièces, une fois modelées, puis à leur cuisson, représente une part très importante du prix de revient du produit; les industriels ont toujours tenté de diminuer ce coût énergétique.

Or, le procédé de fabrication des tuiles et des briques, s'il est considéré dans son ensemble, présente un non-sens économique bien connu de la profession.

En effet, les argiles qui constituent la matière première de base de cette industrie, une fois extraites de carrières et débarrassées de leurs constituants indésirables que sont les pièces et objets métalliques, ne présentent généralement pas une humidité inhérente suffisante pour être directement façonnée. Il est alors nécessaire de leur faire comporter une quantité d'eau suffisante pour atteindre leur plasticité optimale, plasticité qui est indispensable pour l'obtention d'un parfait modelage des pièces.

Or, avant la céramisation des pièces par cuisson à 1000-1200°C, un séchage complet doit être effectué afin d'éliminer toute eau libre résiduelle sans provoquer des tensions internes. Il s'ensuit que toute eau ajoutée pour faciliter le modelage des pièces, pénalise le bilan énergétique.

L'industriel recherche donc à réduire au minimum, voire à éliminer totalement, cette quantité d'eau, dite eau de modelage.

La relation liant la plasticité d'une argile à son humidité dépend principalement de deux facteurs qui sont

- la nature minéralogique de l'argile et
- la granulométrie des particules qui la composent.

Les argiles sont de nature complexe et variable selon le site d'exploitation dont elles sont extraites. Elles sont généralement composées d'aluminosilicates lamellaires hydratés comme l'illite, la sericite, la kaolinite, la chlorite et la montmorillonite. Certaines contiennent du quartz mais aussi de la calcite ou de la dolomite, ou des composés ferreux. Il est bien connu de l'homme de l'art que l'attapulgite, tout comme la montmorillonite pénalisent la plasticité de l'argile. Les argiles riches en ces constituants réquièrent donc des humidités de façonnage élevées. De nombreux autres paramètres exercent une influence sur la plasticité d'une argile; parmi ces paramètres, on peut citer la nature des cations échangeables des aluminosilicates entrant dans sa constitution, la cristallinité des minéraux, la distribution granulométrique des particules et la présence de composés organiques, de sels minéraux et de minéraux calcaires.

La plasticité des argiles est due au glissement les unes par rapport aux autres des couches lamellaires des aluminosilicates sous l'effet d'une force de déformation dirigée dans le plan de ces couches lamellaires. La plasticité est donc inversement proportionnelle aux forces liant deux couches superposées. Plus ces forces seront grandes et l'interdistance faible, plus faible sera la plasticité de l'argile.

L'eau de constitution des hydrates minéraux est directement absorbée sur les couches minérales de l'argile avec une orientation précise. Elle ne prend pas part à l'apparition du phénomène de plasticité. Lorsque tous les sites susceptibles de constituer des hydrates sont remplis, l'addition d'une très faible quantité d'eau entraîne l'apparition du phénomène de plasticité; l'eau venant s'intercaler entre les couches lamellaires de l'argile réduit alors de façon drastique les forces des liaisons inter-lamellaires, jouant ainsi le rôle d'un lubrifiant.

Il existe plusieurs méthodes pour déterminer la plasticité d'une argile.

Une première méthode consiste à mesurer la quantité d'eau nécessaire pour amener la plasticité à un degré qui serait optimal aux yeux de l'utilisateur; il s'agit là d'un critère assez subjectif.

Une seconde méthode consiste à déterminer ce qu'on appelle les "limites d'Atterberg" de l'argile étudiée; il s'agit des humidités minimale et maximale permettant de conférer à l'argile non seulement une maniabilité suffisante mais également la faculté dite de rétention de forme après modelage.

Une troisième méthode consiste à mesurer la pénétration d'un objet, comme par exemple une aiguille, un cylindre ou un cône, dans une masse d'argile plastique sous une charge donnée pour différentes valeurs de l'humidité.

Enfin, une quatrième méthode, plus récente, consiste à établir les courbes de déformation d'une pièce d'argile sous des contraintes variables. On détermine alors, pour différentes valeurs de l'humidité et pour des vitesses croissantes d'augmentation des contraintes, d'une part le seuil de contrainte provoquant une déformation et d'autre part, le maximum de déformation de la pièce d'argile avant rupture.

L'industriel céramiste est confronté à un problème quasiment analogue dans la fabrication des produits en terre cuite constitués par les matériels sanitaires tels que les lavabos et les éviers.

Les argiles utilisées dans la fabrication de ces matériels sont des argiles atomisées; celles-ci sont obtenues par atomisation de barbotine ou de "slurry" d'argiles finement broyées par voie humide.

L'homme de l'art a un intérêt évident à pouvoir accroître la concentration en argiles des barbotines préparées lors du broyage humide, toute augmentation de concentration réduisant la quantité d'eau à évaporer à l'atomisation; il a également un intérêt évident à utiliser une quantité d'eau minimale au moment du façonnage ou modelage pour rendre plastique ou fluide la pâte préparée à partir de l'argile atomisée.

Il a déjà été proposé, dans la fabrication des produits en terre cuite, d'avoir recours à des additifs pour faciliter le modelage de l'argile en vue de leur donner la forme requise, par exemple la forme d'une tuile ou d'une brique.

On peut citer à cet égard les lignosulfites de sodium [Albenque M., Salome J., Ind. Ital. Laterizi, 1973-27 (6), 163-8] ou les lauryl éther sulfates éthoxylés [Bragata Marcia, Junior, Armanda Amarente, Amarente José AL, Mackevicia Roberto - ESC SENAï "Ceramica" Sao Paulo, 1983-25 (159), 85-91].

Il se trouve qu'aucun de ces additifs n'a conduit à une exploitation de portée industrielle.

On peut également citer les mélanges de métasilicates et de tripolyphosphates.

Ces produits ont été utilisés dans la fabrication des argiles atomisées pour sanitaires en vue de réduire la viscosité des suspensions d'argiles lors du broyage humide.

On peut citer par ailleurs les adjuvants organiques tels que les polyacrylates; leur inconvénient réside dans le fait que l'argile atomisée, aussi appelée "cru stabilisé", présente alors en son sein le phénomène désigné par l'expression "coeur noir" provenant de la combustion des matières organiques; la présence de ce "coeur noir" fragilise l'argile lors de la céramisation.

On peut citer enfin les sels alcalins de certains diesters de l'acide phosphorique qui sont décrits dans le document DE 44 04 218 A-1 comme agents liquéfiants pour suspensions aqueuses de poudres minérales finement divisées destinées à la fabrication de porcelaines dures et qui comprennent de l'ordre de 50% en poids d'argiles.

L'invention a pour but, surtout, de remédier aux inconvénients de l'art antérieur et de mettre à la disposition de l'industriel des adjuvants propres à faciliter le modelage, c'est-à-dire d'augmenter la plasticité des argiles utilisées pour la fabrication des produits en terre cuite, notamment des tuiles et des briques et d'augmenter la fluidité des pâtes d'argiles atomisées utilisées pour la fabrication des matériels sanitaires sans avoir d'effets négatifs au niveau des produits finis.

Et il est du mérite de la Société Demanderesse d'avoir trouvé que, de façon tout aussi surprenante qu'inattendue, ce but était atteint dès lors que l'on fait comporter à l'argile constituant la matière première pour la fabrication des produits en terre cuite, une quantité efficace d'un agent propre à améliorer les propriétés rhéologiques de ces argiles et constitué par au moins l'un des composés du groupe comprenant des mono-, di- et tri-alcoylphosphates esters et certains de leurs dérivés.

Elle a, en effet, déterminé

- que les composés en question exercent, de façon surprenante, une influence considérable sur la rhéologie des dispersions et pâtes d'argiles dans un domaine de concentration en matières sèches de ces dispersions et pâtes très large de 20 à 95%,
- que les argiles atomisées comme les produits en terre cuite du type tuiles ou briques, obtenus à partir d'argiles comprenant les susdits composés, ne présentent pas d'effets rédhibitoires après la céramisation et
- que les argiles atomisées ne présentent pas de phénomène de coeur noir et que les tuiles après cuisson sont en tout point comparables aux tuiles témoins ne comportant pas les susdits composés, les caractéristiques physiques telles que la porosité, la perméabilité, le retrait dimensionnel et la résistance en flexion n'étant aucunement affectées.

Il s'ensuit que l'invention a pour objet un procédé de fabrication, à partir d'argiles, de produits en terre cuite comprenant, d'une part, les tuiles, les briques et les accessoires de toiture et de cheminées et, d'autre part, les matériels sanitaires tels que les lavabos et les éviers, les argiles utilisées étant alors sous forme atomisée, caractérisé par le fait que l'on fait comporter auxdites argiles constituant la matière première, une quantité efficace d'au moins un agent propre à améliorer leurs propriétés rhéologiques ou agent rhéologique, choisi, lorsqu'il s'agit de la fabrication des tuiles, des briques et des accessoires de toiture et de cheminées, dans le groupe comprenant les mono-, di- et tri-alcoylphosphates esters de formule (I) ou des dérivés de ces esters représentés par les formules (II) à (IV), les formules (I) à (IV) étant indiquées ci-après:

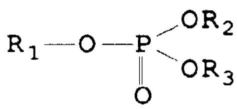

(I)

dans laquelle

- $R_1$ représente un radical alkyle, hydroxyalkyle, alcoxyalkyle, polyalcoxyalkyle, haloalkyle, cycloalkyle ou aminoalkyle comprenant de 1 à 40 atomes de carbone,
- $R_2$ et $R_3$, qui sont identiques ou différents l'un de l'autre, représentent un atome d'hydrogène ou un radical alkyle, hydroxyalkyle, alcoxyalkyle, polyalcoxyalkyle, haloalkyle, cycloalkyle ou aminoalkyle comprenant de 1 à 40 atomes de carbone,

  $R_2$ et $R_3$ pouvant former ensemble un cycle carboné de 2 à 7 atomes de carbone, ce qui conduit à la formule (II):

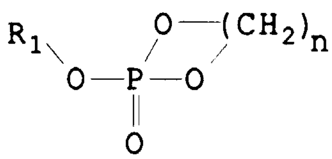

(II)

étant entendu que, lorsque l'un des substituants $R_2$ et $R_3$ représente un radical hydroxyalkyle, l'alcoylphosphate ester conforme à l'invention peut se présenter sous la forme d'un polymère de formule (III):

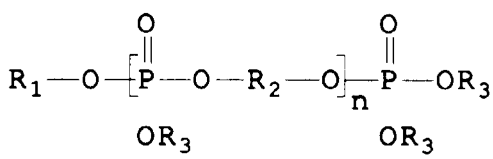

(III)

et que, lorsqu'au moins l'un des radicaux $R_2$ ou $R_3$ représente un atome d'hydrogène, l'alcoylphosphate ester selon l'invention peut être salifié par un agent basique B au sens de Bronsted et de Lewis conduisant à un sel de formule (IV) suivant le schéma réactionnel suivant:

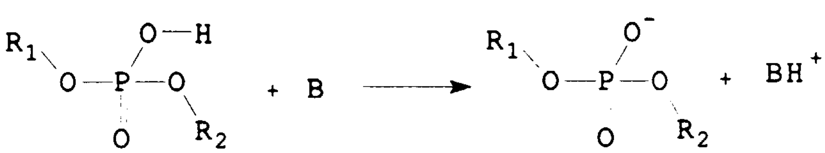

(IV)

l'agent B étant choisi parmi:
- les hydroxydes alcalins du groupe comprenant NaOH, KOH, la lithine, la chaux hydratée, la magnésie,
- l'ammoniaque, les amines aliphatiques, cycloaliphatiques et aromatiques, éventuellement substituées, les polyamines du groupe comprenant la diéthanolamine, la monoéthanolamine, la triéthanolamine et les polyéthylèneimines,

et choisi, lorsqu'il s'agit de la fabrication des matériels sanitaires en céramique à partir d'argiles atomisées, dans le même groupe à la différence près que B est différent de NaOH, KOH et de LiOH quand $R_2$ est différent de H.

On désigne par l'expression "quantité efficace" la quantité (exprimée en g) d'alcoylphosphate ester tel que défini

ci-dessus, suffisante pour réduire généralement d'au moins 1% la quantité d'eau (exprimée en humidité réelle) incorporée au mélange eau-argile tout en conservant constante la plasticité du mélange.

L'humidité réelle du mélange est donnée par le rapport exprimé en pourcentage du poids d'eau contenue dans le mélange au poids de matières sèches contenues dans ce même mélange, les deux poids étant exprimés dans la même unité.

L'agent rhéologique conforme à l'invention est caractérisé par le fait qu'il comprend essentiellement au moins l'un des mono-, di- et trialcoylphosphates esters de formule (I) ou des dérivés de ces esters représentés par les formules (II) à (IV) tels que définis ci-dessus.

L'invention a également pour objet l'utilisation des mono-, di- et trialcoylphosphates esters de formule (I) et de leurs dérivés de formules (II), (III) et (IV) tels que définis ci-dessus en tant qu'agents propres à améliorer les propriétés rhéologiques des argiles.

Selon un mode de réalisation avantageux du procédé conforme à l'invention, l'agent rhéologique, autrement dit les alcoylphosphates esters ou leurs dérivés représentés par les formules (I), (II), (III) et (IV) tels que définis ci-dessus sont mis en oeuvre sous la forme de solutions aqueuses ou solvantées, ou d'émulsions aqueuses comportant un solvant, de préférence une huile, la concentration de ces solutions ou émulsions étant aussi élevée que possible et avantageusement de 30 à 70%, ce qui permet un dosage continu de l'agent actif.

Selon un autre mode de réalisation avantageux du procédé conforme à l'invention, l'agent rhéologique, autrement dit les alcoylphosphates esters et leurs dérivés selon les formules (I) à (IV) tels que définis ci-dessus sont mis en oeuvre de préférence à la température ambiante et mélangés à la suspension ou pâte d'argiles à raison de 0,1 à 50 kg par tonne d'argile sèche, le mélange étant effectué avant le modelage notamment de la tuile ou de la brique ou lors du broyage humide des suspensions d'argile avant atomisation.

Selon un autre mode de réalisation avantageux du procédé conforme à l'invention, l'argile comportant l'agent rhéologique conforme à la présente invention, ladite argile constituant la matière première, est mise en oeuvre après addition d'une quantité d'eau suffisante, avantageusement de 20 à 40% en poids dans un procédé de broyage par voie humide ou avantageusement de 5 à 25% en poids dans les procédés de façonnage des tuiles et briques.

L'invention pourra être encore mieux comprise à l'aide des exemples non limitatifs qui suivent et dans lesquels sont décrits des modes de réalisation avantageux du procédé conforme à l'invention.

Dans ces exemples, les pourcentages et les indications en parties sont exprimés en poids.

**EXEMPLE 1**

Préparation d'échantillons en terre cuite sous forme de plaques

On prépare 15 kg d'un mélange constitué de 4,2 kg de sable à 8% d'humidité réelle et de 10,8 kg d'argile à 30% d'humidité réelle; ce mélange est représentatif en composition du mélange industriel utilisé pour la fabrication des tuiles.

On passe ce mélange au laminoir, puis on le sèche en étuve à 110°C durant 24 heures; après sortie de l'étuve et refroidissement, ce mélange est broyé dans un broyeur à mâchoires, puis stocké à l'abri de l'humidité.

A partir de ce mélange sec, on prépare un mélange humide.

Pour ce faire, on pèse 2500 g (T-g) du susdit mélange sec et on y ajoute la quantité d'eau (E-g) nécessaire pour obtenir l'humidité de façonnage souhaitée, en l'occurrence de 500 à 750 g.

Lorsqu'on utilise, conformément au procédé selon l'invention, un agent rhéologique, autrement dit l'un des alcoylphosphates esters ou l'un de leurs dérivés selon les formules (I) à (IV), on le met en oeuvre par incorporation à l'eau de façonnage; on tient alors compte, dans la détermination de la quantité nécessaire d'eau de façonnage, de l'eau apportée par ledit alcoylphosphate ester; la quantité d'alcoylphosphate ester est exprimée en % en poids d'alcoylphosphate ester sec/poids de terre sèche.

On mélange soigneusement l'eau de façonnage à l'argile à l'aide d'une spatule pour homogénéiser la pâte. Une fois cette opération terminée, on passe le mélange humide au laminoir pour conférer une homogénéité encore meilleure à la pâte.

Celle-ci est ensuite soumise à une opération d'extrusion.

A cet égard, on introduit, par portions successives, dans une extrudeuse de laboratoire comprenant essentiellement une vis d'introduction et une chambre sous vide et équipée d'une filière d'ouverture rectangulaire de 50 mm x 12 mm, le mélange humide de sable et d'argile comprenant éventuellement un des agents rhéologiques utilisés conformément au procédé selon l'invention.

Après passage de la totalité de l'argile dans l'extrudeuse, on recycle le mélange extrudé jusqu'à obtenir une galette homogène en sortie de filière.

On arrête l'extrusion après production d'une bande d'argile extrudée d'environ 50 cm de longueur, de 5 cm de largeur et de 1 cm d'épaisseur.

On mesure la plasticité de l'argile extrudée sur une galette de 50 mm de longueur découpée dans la susdite bande

extrudée.

Pour ce faire, dans le cadre de la susdite troisième méthode, on utilise un pénétromètre à aiguille.

L'aiguille est amenée à la surface de l'argile, puis est libérée pendant un temps donné. Elle pénètre dans la galette d'argile. On mesure la profondeur de pénétration de l'aiguille au dixième de mm près. On effectue 10 mesures à différents endroits de la galette situés à plus de 1 cm des arêtes externes afin que la mesure ne soit pas perturbée par l'effet de bords.

La plasticité (P), exprimée en dixièmes de mm, est constituée par la moyenne des résultats des dix mesures.

On mesure également l'humidité réelle Hr de l'argile constitutive de la bande extrudée; on utilise un prélèvement de "m0"-g de la galette humide; on sèche ce prélèvement pendant 30 minutes dans une étuve à 150±2°C. Après refroidissement et pesée, on obtient "m1"-g d'argile sèche.

L'humidité réelle en % par rapport à l'argile sèche est calculée par la formule:

$$Hr\% = \frac{(mO - ml)}{ml} \times 100$$

On découpe ensuite 4 plaquettes de 12 cm de longueur à partir de la susdite bande d'argile extrudée.

Deux de ces plaquettes sont introduites dans un four industriel afin d'y subir un cycle de séchage-cuisson en vraie grandeur.

Les deux autres sont préalablement séchées à l'air libre durant 24 heures puis cuites à 1150°C dans un four de laboratoire.

On note l'aspect extérieur des plaquettes ainsi que la présence de fissure et de feuilletage, puis on découpe l'une de ces plaquettes transversalement pour contrôler l'aspect interne.

On consigne la présence éventuelle de coeurs jaunes ou noirs et la présence éventuelle de fissures internes.

En procédant de la manière ainsi décrite, on a réalisé tout d'abord six essais représentatifs de l'art antérieur, c'est-à-dire sans recours à un agent rhéologique conforme à l'invention, autrement dit à un alcoylphosphate ester ou dérivé selon l'une des formules (I) à (IV).

Les résultats des mesures effectuées dans le cadre de ces six essais sont réunis dans le tableau I et permettent d'établir une courbe $C_1$; cette courbe qui est montrée sur le graphique de la figure unique représente la variation de la plasticité (P), exprimée en dixième de mm, de la matière première en fonction de son humidité réelle (Hr), l'eau étant utilisée comme plastifiant de modelage. La courbe $C_1$, obtenue en utilisant les points 1 à 6 qui sont représentatifs respectivement des essais 1 à 6, est une droite et montre que, dans le domaine d'humidité intéressant la fabrication des tuiles, la plasticité mesurée par pénétration d'une aiguille est liée linéairement à l'humidité réelle.

TABLEAU I

| Essai | Agent rhéologique selon l'invention | Dose (‰) | E/T (%) | P (1/10 mm) | Hr (%) | Aspect après cuisson | |
|---|---|---|---|---|---|---|---|
| | | | | | | Four laboratoire | Four industriel |
| Comparatif 1 | - | - | 28 | 132,3 | 28,8 | RAS | |
| 2 | - | - | 25 | 96,5 | 26,7 | | |
| 3 | - | - | 24 | 95,0 | 26,6 | | |
| 4 | - | - | 25 | 71,0 | 24,7 | | |
| 5 | - | - | 24 | 66,6 | 24,2 | | |
| 6 | - | - | 25 | 63,0 | 23,6 | | |
| selon l'invention 7 | A | 7,5 | 23 | 79,1 | 23,8 | RAS | RAS |
| 8 | B | 7,5 | 23 | 58,5 | 21,1 | RAS | |
| 9 | C | 7,5 | 23 | 81,8 | 24,0 | RAS | RAS |

Dans le tableau I, "E/T" (exprimé en %) désigne le rapport du poids d'eau ajoutée au poids de terre utilisée, les deux poids étant exprimés dans la même unité.

On a procédé par ailleurs à trois essais supplémentaires, 7 à 9, illustrant le procédé conforme à l'invention.

Dans l'essai 7, on a mélangé un premier agent rhéologique conforme à l'invention et désigné par A, à savoir le triisooctyl-phosphate, avec de l'argile à modeler à raison de 7,5‰ en poids.

On mesure la plasticité par la méthode au pénétromètre à aiguilles; on mesure également la valeur de l'humidité de modelage et on porte en 7 sur le graphique de la figure unique le point correspondant à la valeur trouvée pour la plasticité, c'est-à-dire 79,1 dixièmes de mm et pour l'humidité, c'est-à-dire 23,8%. Le point 7 est situé au-dessus de la courbe $C_1$ à un niveau voisin de celui des points 2 et 3, démontrant par là qu'à plasticité égale, les agents rhéologiques de formule (I), en l'occurrence celui désigné par A, permettent de réduire l'eau de façonnage de l'argile.

Pour l'essai 8, on procède comme pour l'essai 7, à la différence près que c'est un agent rhéologique conforme à l'invention différent, à savoir le sel de monoéthanolamine de l'ester phosphorique mixte de 2-éthylhexyle et de n-butyle mono-acide, utilisé à la dose de 7,5‰ en poids et désigné par B, qui est mis en oeuvre.

On a de nouveau mesuré la plasticité P et l'humidité de modelage Hr; on a trouvé respectivement les valeurs de 58,5 dixièmes de mm et de 21,1%. Le point caractéristique 8 relatif à cet essai se situe également au-dessus de la courbe $C_1$ à un niveau proche de celui des points 2 et 3; cet essai démontre l'efficacité des agents de formule (IV) utilisés conformément à l'invention, en l'occurrence de l'agent B, pour réduire la quantité nécessaire d'eau de façonnage.

Pour l'essai 9, on a procédé comme pour les essais 7 et 8, à la différence près que l'agent rhéologique conforme à l'invention et désigné par C (dose de 7,5‰ en poids) est cette fois-ci constitué par l'ester phosphorique mixte de 2-éthylhexyle et de n-butyle monoacide.

On effectue les mêmes mesures que dans les essais 7 et 8; les valeurs correspondantes sont respectivement de 81,8 dixièmes de mm et de 24%.

Le point correspondant, désigné par 9, est situé encore au-dessus de la courbe $C_1$ au niveau des points 4, 5 et 6, prouvant ainsi la faculté de cet agent rhéologique, lorsqu'il est appliqué dans les suspensions ou pâtes d'argile, de réduire la quantité nécessaire d'eau de façonnage.

## EXEMPLE 2

Essais industriels dans une tuilerie

On utilise, dans le procédé conforme à l'invention, un agent rhéologique réducteur d'eau constitué par le sel monosodique de l'ester phosphorique mixte de 2-éthylhexyle et de n-butyle désigné ci-après par (D).

On a effectué un premier essai sans addition d'agent D (essai 10) et deux autres essais (11 et 12) avec mise en oeuvre du susdit agent pour des dosages en D correspondant respectivement à 1,30‰ et à 2,20‰.

L'agent D est directement introduit par une rampe de pulvérisation dans le mélangeur d'argile humide (humidité Hr% égale à 22,7) alimentant la mouleuse industrielle.

Les débits d'introduction de l'agent rhéologique conforme à l'invention ont été mesurés par dépesée; on peut ainsi contrôler le dosage relatif de l'agent par rapport à l'argile sèche (dose en ‰); le terme "dépesée" signifie que les débits de produit sont calculés par l'enregistrement en continu du poids, donc de la pesée, du fût de réactif.

Les mesures de plasticité P (en 1/10 de mm) par pénétration d'aiguille ont été effectuées sur des galettes directement découpées en sortie de mouleuse et dont l'épaisseur est de 20 mm et la largeur de 35 cm.

De plus, on a relevé la pression (en bars) en sortie de mouleuse ainsi que les intensités I (en Ampères) des moteurs du malaxeur et de la mouleuse avant, pendant et après l'introduction de l'agent rhéologique afin de faire apparaître l'effet de ce dernier sur la plasticité du mélange extrudé.

Les tuiles témoins et celles pour la fabrication desquelles on a utilisé l'agent D ont ensuite été soumises au procédé de séchage puis de cuisson dans un four sécheur industriel de technologie du type "hydrocasing"; les fours de ce type sont décrits dans "Ullmann's Encyclopedia of Industrial Chemistry", page 450, volume A7, chapitre "Construction Ceramics".

En sortie de four, on a comparé les tuiles traitées avec les tuiles témoins fabriquées sans agent.

On a mesuré sur ces tuiles le retrait dimensionnel, la résistance en flexion (exprimée en décaNewtons dN), la perméabilité (exprimée en $g/cm^2$/jour) selon la norme NFP 31.306 et, dans certains cas, la porosité.

De plus, les tuiles ont fait l'objet d'un examen d'aspect; certaines ont été coupées transversalement pour permettre l'examen interne, c'est-à-dire l'examen de l'aspect de cuisson du coeur du matériau.

Les résultas des essais industriels 10, 11 et 12 sont regroupés dans le tableau II.

## TABLEAU II

| CARACTERISTIQUES ARGILE HUMIDE | | | | | | | CARACTERISTIQUES DES PRODUITS EN TERRE CUITE (tuiles) | | | | | |
|---|---|---|---|---|---|---|---|---|---|---|---|---|
| Essai | Agent rhéologique | Proportion d'agent (‰) | P (1/10 mm) | Hr (%) | I (ampères) mouleuse | I (ampères) malaxeur | Dimensions | | Résistance en flexion (dN) | Perméabilité $g/cm^2$/jour | Aspect | |
| | | | | | | | largeur (mm) | longueur (mm) | | | externe | interne |
| 10 | - | 6 | 67,5 | 22,7 | 140 | 110 | 173 | 269,5 | 66,4 | 0,35 | RAS | RAS |
| 11 | D | 1,30 | 83,6 | 22,7 | 115 | 90 | 174,5 | 272,5 | 66,6 | 0,27 | Pas de C jaune, pas de fissure RAS | Pas de C jaune, pas de fissure RAS |
| 12 | D | 2,20 | 101,3 | 22,7 | 100 | 85 | 175 | 273,5 | 66,9 | 0,29 | Pas de C jaune, pas de fissure RAS | Pas de C jaune, pas de fissure RAS |

Les résultats réunis dans le tableau II montrent que l'utilisation conforme à l'invention d'un agent rhéologique de formule (I) améliore la plasticité d'une pâte d'argile à humidité de façonnage constante.

Il devient possible de modeler une argile tout en réduisant la quantité d'eau de façonnage, sans que la facilité de modelage diminue.

De plus, l'utilisation conforme à l'invention de l'agent rhéologique ne provoque pas d'effet rédhibitoire sur le produit en terre cuite après cuisson; les caractéristiques mécaniques, à savoir la perméabilité, la résistance en flexion, le retrait ainsi que l'aspect extérieur et à coeur du produit obtenu notamment de la tuile sont en tout point comparables à ceux d'une tuile témoin modelée avec une quantité d'eau plus importante.

La mise en oeuvre de l'agent rhéologique ne provoque pas de tension au sein de la tuile lors du séchage et n'affecte pas le processus de vitrification et de céramisation lors de la cuisson; aucun phénomène de coeur jaune et noir dû à une sous-oxydation ou à une décomposition organique n'apparaît au sein de la tuile.

**Revendications**

1. Procédé de fabrication, à partir d'argiles, de produits en terre cuite comprenant, d'une part, les tuiles, les briques et les accessoires de toiture et de cheminées et, d'autre part, les matériels sanitaires tels que les lavabos et les éviers, les argiles utilisées étant alors sous forme atomisée, caractérisé par le fait que l'on fait comporter auxdites argiles constituant la matière première, une quantité efficace d'au moins un agent propre à améliorer leurs propriétés rhéologiques ou agent rhéologique, choisi, lorsqu'il s'agit de la fabrication des tuiles, des briques et des accessoires de toiture et de cheminées, dans le groupe comprenant les mono-, di- et tri-alcoylphosphates esters de formule (I) ou des dérivés de ces esters représentés par les formules (II) à (IV), les formules (I) à (IV) étant indiquées ci-après:

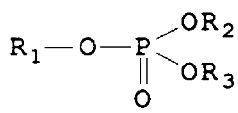

(I)

dans laquelle

- $R_1$ représente un radical alkyle, hydroxyalkyle, alcoxyalkyle, polyalcoxyalkyle, haloalkyle, cycloalkyle ou aminoalkyle comprenant de 1 à 40 atomes de carbone,
- $R_2$ et $R_3$, qui sont identiques ou différents l'un de l'autre, représentent un atome d'hydrogène ou un radical alkyle, hydroxyalkyle, alcoxyalkyle, polyalcoxyalkyle, haloalkyle, cycloalkyle ou aminoalkyle comprenant de 1 à 40 atomes de carbone, $R_2$ et $R_3$ pouvant former ensemble un cycle carboné de 2 à 7 atomes de carbone, ce qui conduit à la formule (II):

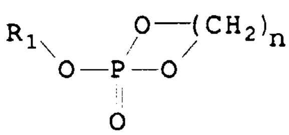

(II)

étant entendu que, lorsque l'un des substituants $R_2$ et $R_3$ représente un radical hydroxyalkyle, l'alcoylphosphate ester conforme à l'invention peut se présenter sous la forme d'un polymère de formule (III) :

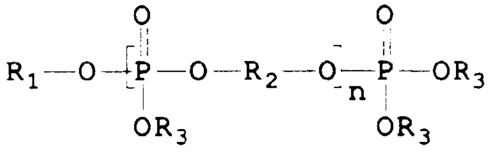

(III)

et que, lorsqu'au moins l'un des radicaux $R_2$ ou $R_3$ représente un atome d'hydrogène, l'alcoylphosphate ester selon l'invention peut être salifié par un agent basique B au sens de Bronsted et de Lewis conduisant à un sel de formule (IV) suivant le schéma réactionnel suivant:

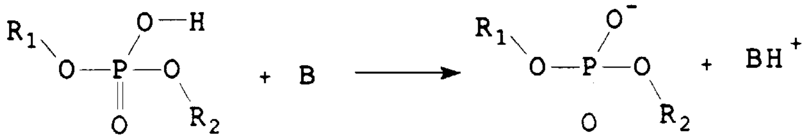

(IV)

l'agent B étant choisi parmi:

- les hydroxydes alcalins du groupe comprenant NaOH, KOH, la lithine, la chaux hydratée, la magnésie,
- l'ammoniaque, les amines aliphatiques, cycloaliphatiques et aromatiques, éventuellement substituées, les polyamines du groupe comprenant la diéthanolamine, la monoéthanolamine, la triéthanolamine et les polyéthylène-imines,

et choisi, lorsqu'il s'agit de la fabrication des matériels sanitaires en céramique à partir d'argiles atomisées, dans le même groupe à la différence près que B est différent de NaOH, KOH et de LiOH quand $R_2$ est différent de H.

**2.** Agent rhéoloqique propre à améliorer les propriétés rhéologiques des argiles, caractérisé par le fait que, dans la mesure où il est destiné à la fabrication des tuiles, des briques et des accessoires de toiture et de cheminées, il comprend essentiellement au moins l'un des mono-, di- et trialcoylphosphates esters de formule (I) ou des dérivés de ces esters représentés par les formules (II) à (IV), les formules (I) à (IV) étant indiquées ci-après:

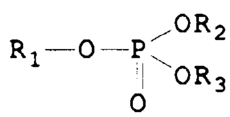

(I)

dans laquelle

- $R_1$ représente un radical alkyle, hydroxyalkyle, alcoxyalkyle, polyalcoxyalkyle, haloalkyle, cycloalkyle ou aminoalkyle comprenant de 1 à 40 atomes de carbone,
- $R_2$ et $R_3$, qui sont identiques ou différents l'un de l'autre, représentent un atome d'hydrogène ou un radical alkyle, hydroxyalkyle, alcoxyalkyle, polyalcoxyalkyle, haloalkyle, cycloalkyle ou aminoalkyle comprenant de 1 à 40 atomes de carbone,

  $R_2$ et $R_3$ pouvant former ensemble un cycle carboné de 2 à 7 atomes de carbone, ce qui conduit à la formule (II):

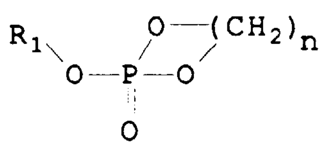

(II)

étant entendu que, lorsque l'un des substituants $R_2$ et $R_3$ représente un radical hydroxyalkyle, l'alcoylphosphate ester conforme à l'invention peut se présenter sous la forme d'un polymère de formule (III):

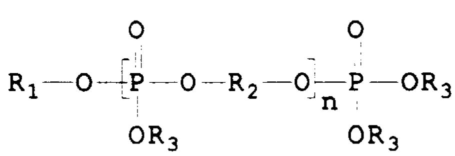

(III)

et que, lorsqu'au moins l'un des radicaux $R_2$ ou $R_3$ représente un atome d'hydrogène, l'alcoylphosphate ester selon l'invention peut être salifié par un agent basique B au sens de Bronsted et de Lewis conduisant à un sel de formule (IV) suivant le schéma réactionnel suivant:

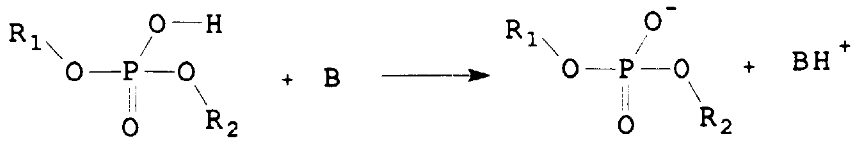

(IV)

l'agent B étant choisi parmi:

- les hydroxydes alcalins du groupe comprenant NaOH, KOH, la lithine, la chaux hydratée, la magnésie,
- l'ammoniaque, les amines aliphatiques, cycloaliphatiques et aromatiques, éventuellement substituées, les polyamines du groupe comprenant la diéthanolamine, la monoéthanolamine, la triéthanolamine et les polyéthylène-imines,

et que, dans la mesure où il est destiné à la fabrication de matériels sanitaires tels que les lavabos et les éviers à partir d'argiles atomisées, il comprend essentiellement au moins l'un des mono-, di- et trialcoylphosphates esters identifiés ci-dessus à la différence près que B est différent de KOH, NaOH et LiOH quand $R_2$ est différent de H.

**3.** Utilisation, en tant qu'agents propres à améliorer les propriétés rhéologiques des argiles, des mono-, di- et trialcoylphosphates esters de formule (I) ou de leurs dérivés représentés par les formules (II) à (IV), les formules (I) à (IV) étant identifiées à la revendication 1.

**4.** Procédé selon la revendication 1, caractérisé par le fait que les alcoylphosphates esters ou leurs dérivés représentés par les formules (I), (II), (III) et (IV) sont mis en oeuvre sous la forme de solutions aqueuses ou solvantées, ou d'émulsions aqueuses comportant un solvant, de préférence une huile, la concentration de ces solutions ou émulsions étant aussi élevée que possible et avantageusement de 30 à 70%, ce qui permet un dosage continu de l'agent actif.

**5.** Procédé selon l'une des revendications 1 et 4, caractérisé par le fait que les alcoylphosphates esters et leurs dérivés selon les formules (I) à (IV) sont mis en oeuvre de préférence à la température ambiante et mélangés à la suspension ou pâtes d'argiles à raison de 0,1 à 50 kg par tonne d'argile sèche, le mélange étant effectué avant le modelage notamment de la tuile ou de la brique ou lors du broyage humide des suspensions d'argile avant atomisation.

**6.** Procédé selon l'une des revendications 1, 4 et 5, caractérisé par le fait que l'argile comportant l'agent propre à améliorer les propriétés rhéologiques de ces argiles, est mise en oeuvre après addition d'une quantité d'eau suffisante, avantageusement de 20 à 40% en poids dans un procédé de broyage par voie humide ou avantageusement de 5 à 25% en poids dans les procédés de façonnage des tuiles et briques.

**7.** Procédé selon l'une des revendications 1 et 4 à 6, caractérisé par le fait que l'alcoylphosphate ester ou ses dérivés est choisi dans le groupe comprenant:

- le triisooctyl-phosphate,
- le sel de monoéthanolamine de l'ester phosphorique mixte de 2-éthylhexyle et de n-butyle monoacide,
- l'ester phosphorique mixte de 2-éthylhexyle et de n-butyle monoacide, et
- le sel monosodique de l'ester phosphorique mixte de 2-éthylhexyle et de n-butyle.

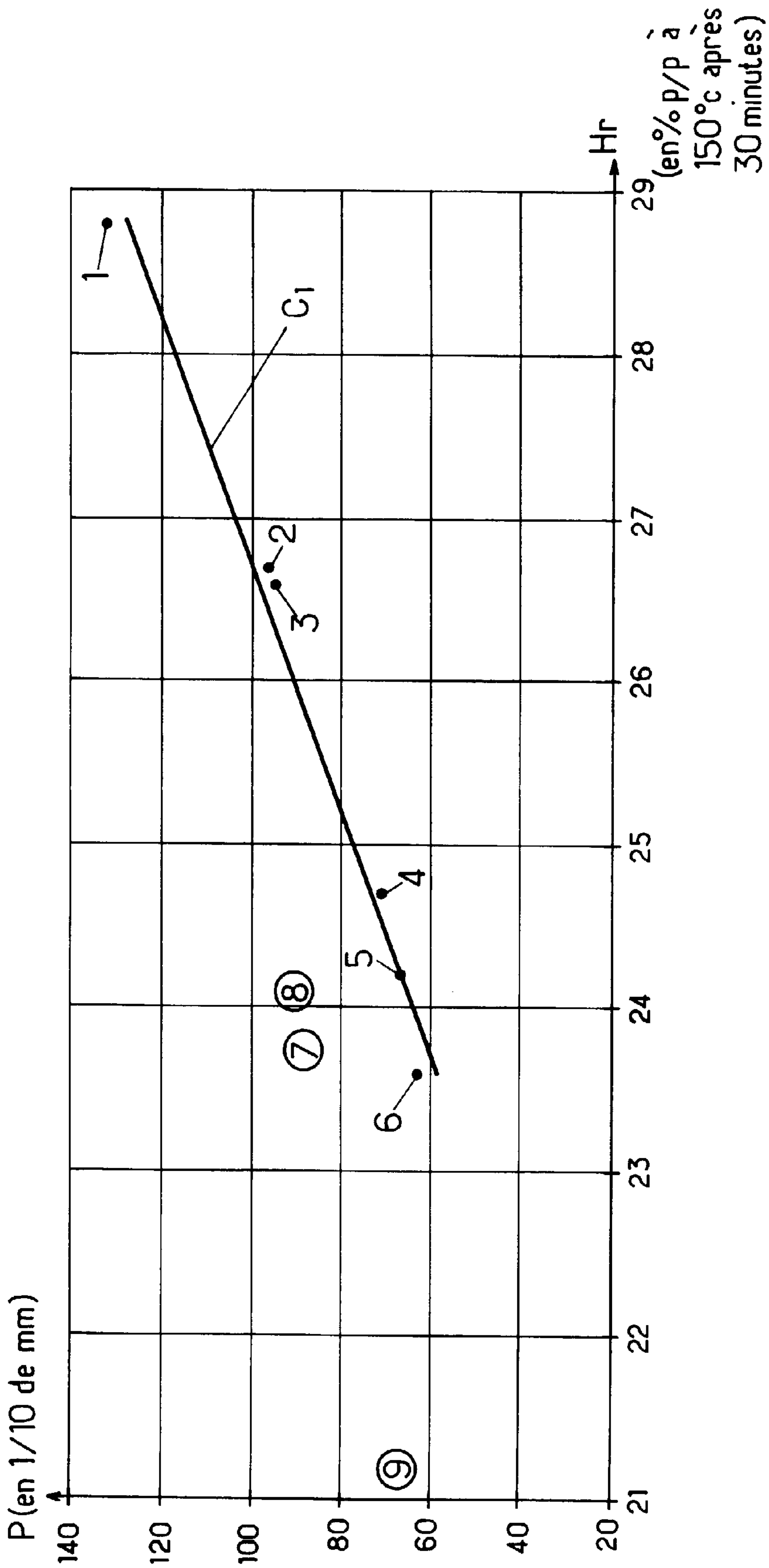
P (en 1/10 de mm)
140
120
100
80
60
40
20
21
22
23
24
25
26
27
28
29
Hr
(en% p/p à 150°c après 30 minutes)
C1
1
2
3
4
5
6
7
8
9

Office européen des brevets

# RAPPORT DE RECHERCHE EUROPEENNE

Numero de la demande
EP 97 40 1059

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DE 44 04 218 A (BAYER AG) 17 Août 1995<br>* page 2, ligne 62 - page 3, ligne 5; revendications 1,3 * | 1 | C04B33/04<br>C04B33/28<br>B01F17/00<br>C04B33/24 |
| A | * le document en entier *<br>--- | 2-7 | |
| A | US 5 245 070 A (NISHIKAWA NAOYUKI ET AL) 14 Septembre 1993<br>* le document en entier *<br>--- | 1-7 | |
| A | DE 29 21 374 A (CIBA GEIGY UK LTD) 6 Décembre 1979<br>* le document en entier *<br>--- | 1-7 | |
| A | FR 2 517 985 A (KAO CORP) 17 Juin 1983<br>----- | | |

DOMAINES TECHNIQUES RECHERCHES (Int.Cl.6)

C04B
B01F
C07F

Le présent rapport a été établi pour toutes les revendications

| Lieu de la recherche | Date d'achèvement de la recherche | Examinateur |
|---|---|---|
| LA HAYE | 12 Août 1997 | Harbron, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)